# EUROPEAN PATENT APPLICATION

(11) **EP 2 684 980 A2**
(43) Date of publication of application: **15.01.2014**
(21) Application number: 13187466.1
(22) Date of filing: 28.06.2011
(51) Int. Cl.: C23C 24/08, C23C 28/00, C03C 17/34, B32B 17/06

(54) **Method for applying a layer of material to the surface of a non-metallic substrate**

(30) Priority: 08.07.2010 US 832111
(62) Divisional of application: 11731211.6
(71) Applicant: Siemens Energy, Inc., Orlando, FL 32826-2399 (US)
(72) Inventor: Garrett, Randall S, Tega Cay, SC South Carolina 29708 (US); Han, Zhaohui, Oviedo, FL Florida 32766 (US); Jones, William F., York, SC South Carolina 29745 (US)
(74) Representative: McGowan, Nigel George

(57) **Abstract**

A method for applying a layer of material to a surface of a non-metallic substrate to enhance a performance characteristic of the non-metallic substrate, the method comprising: providing a glass backing for the non-metallic substrate; and cold spraying a plurality of boron nitride (BN) particles onto a surface of the glass backing.

## Description

### FIELD OF THE INVENTION

This invention relates to non-metallic substrates, and more particularly, to a method for applying materials to the surface of the non-metallic substrate. The materials could be electrical insulation, additions to improve thermal conductivity and/or additions to impart certain levels of electrical conductivity to the non-metallic substrate.

This invention also relates to the manufacture of composite materials where multiple layers are put together to achieve a final product with specific properties. Using the cold spray process, the composite structure could be developed using materials that are not otherwise suitable for processing using existing standard processes such as paper making and/or solvent transfer.

### BACKGROUND OF THE INVENTION

The use of electrical insulation material on a non-metallic substrate is well-known, particularly for non-metallic substrates positioned between adjacent conductor surfaces, such as adjacent windings in an electrical generator. However, the process by which the electrical insulation material is applied to the non-metallic substrates may vary.

It would be advantageous to develop a new and useful process for applying the electrical insulation material to non-metallic substrates.

### BRIEF DESCRIPTION OF THE DRAWINGS

The invention is explained in the following description in view of the drawings that show:
FIG. 1 depicts a schematic diagram of an exemplary embodiment of a cold spray system for applying a layer of electrical insulation material to a surface of a conductor, in accordance with the present invention;
FIG. 2 depicts a schematic diagram of an exemplary embodiment of the layer of electrical insulation applied to the surface of the conductor illustrated in FIG. 1;
FIG. 3 depicts a schematic diagram of an exemplary embodiment of an alternate layer of electrical insulation applied to the surface of the conductor illustrated in FIG. 1;
FIG. 4 depicts a plot of a spray velocity versus a spray temperature of the system illustrated in FIG. 1 and the eligible materials used for each respective spray velocity and spray temperature;
FIG. 5 depicts a schematic diagram of an exemplary embodiment of a system for applying a layer of material to a surface of a non-metallic substrate, in accordance with the present invention;
FIG. 6 depicts a schematic diagram of an exemplary embodiment of the layer of material applied to the surface of the non-metallic substrate illustrated in FIG. 5;
FIG. 7 depicts a schematic diagram of an exemplary embodiment of the layer of electrically conductive or semi-conducting material applied to the surface of the non-metallic substrate illustrated in FIG. 5; and
FIG. 8 depicts a plot of a spray velocity versus a spray temperature of the system illustrated in FIG. 5 and the eligible materials used for each respective spray velocity and spray temperature.

### DETAILED DESCRIPTION OF THE INVENTION

A method is provided for applying a layer of material to a surface of a non-metallic substrate to enhance a performance characteristic of the non-metallic substrate. One embodiment of the method involves applying a glass backing to the non-metallic substrate, and cold spraying a plurality of mica particles onto a surface of the glass backing. Another embodiment of the method involves providing a glass backing for the non-metallic substrate, and cold spraying a plurality of boron nitride (BN) particles onto a surface of the glass backing.

A conductive tape is provided by the method, including a first layer of an insulation material. The first layer is formed from a backing, where the backing includes a fiber-based or polymer backing having resilient and flexible properties for storage in a rolled form and a layer of mica particles or boron nitride particles. The conductive tape further includes a second layer positioned over the layer of particles, where the second layer is formed from an electrical conductor material.

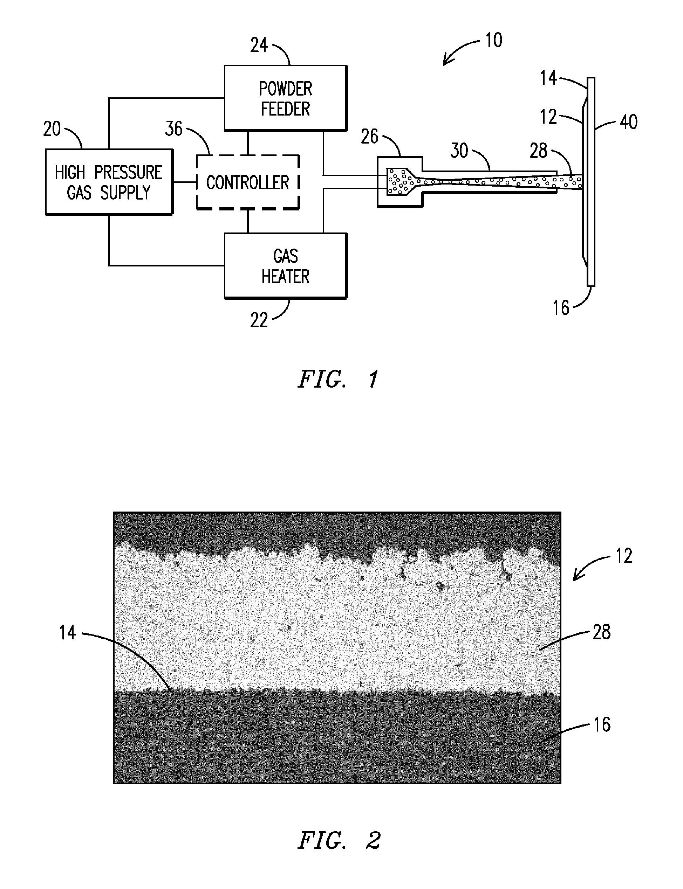

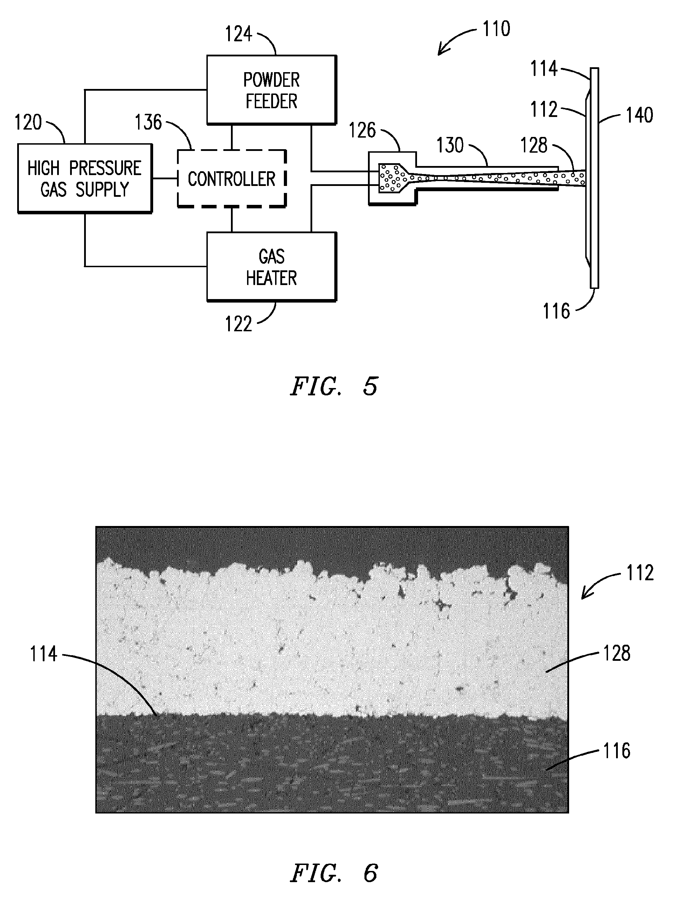

Reference will now be made in detail to the embodiments consistent with the invention, examples of which are illustrated in the accompanying drawings. Wherever possible, the same reference numerals used throughout the drawings refer to the same or like parts. The embodiments of the present invention discuss the process of "cold spraying" or "cold spray." This process involves the acceleration or propulsion of particles at a selective velocity and/or a selective temperature in a direction of a target surface. In conventional systems, particles of coating material are accelerated at a relatively high velocity and high temperature to a target metallic surface, which is relatively hard, and can withstand accelerated particles with high velocity and high temperature, without being damaged, for example. According to embodiments of the present invention, non-metallic particles are accelerated toward a metallic substrate or non-metallic substrate (which has relatively soft, low-temperature characteristics at a selective velocity and selective temperature below respective velocity and temperature thresholds). These substrates are characterized by a relatively soft surface at room temperatures, e.g., malleable, such that particle collisions are generally inelastic, thus allowing the particles to stick to the surface, instead of deflecting off the surface. If the non-metallic particles were cold-sprayed at the target surface at a velocity in excess of the velocity and temperature thresholds, the non-metallic particles would not adhere to the target substrate surface, and may damage or penetrate the target substrate surface. For example, the embodiment of the present invention illustrated in FIG. 1 describes a cold spray process for use in accelerating non-metallic particles toward the surface of a conductor or metallic substrate, to form an electrical insulation layer on the surface of the conductor. In another example, the embodiment of the present invention illustrated in FIG. 5 describes a cold spray process for use in accelerating non-metallic particles toward the surface of a non-metallic substrate, to enhance a performance characteristic of the substrate. As discussed above, the metallic substrate and non-metallic substrates used in the embodiments of the present invention have a relatively soft, low-temperature characteristic (i.e., a relatively soft surface at room temperature, such that the particle collisions are inelastic.) In an exemplary embodiment, as discussed below, by spraying the non-metallic particles at the substrates at a temperature and velocity below a respective temperature and velocity threshold, a variety of types of non-metallic particles may be used, and the non-metallic particles adhere to the substrates, in an inelastic collision. However, the cold spray process discussed in the embodiments of the present invention is not limited to the temperature and velocity parameters being less than the respective temperature and velocity thresholds.

FIG. 1 illustrates an exemplary embodiment of a system 10 for applying a layer 12 of electrical insulation material to a surface 14 of a metallic substrate or conductor 16. Any metallic substrate or conductor may be utilized with the embodiments of the present invention, such as copper, for example. Furthermore, although the embodiments of the present invention discuss a layer 12 applied to the surface 14 of the conductor 16, multiple layers may be applied to the respective surfaces of adjacent conductors, such as the windings in a generator, for example, to provide electrical insulation between adjacent conductors. In an exemplary embodiment, the conductor 16 may take a rectangular shape, as illustrated in FIG. 1, such as parallel rectangular conductors which are stacked in a parallel arrangement in a generator rotor winding, for example.

The system 10 includes a high pressure gas supply 20, which stores high pressure gas, such as helium, for example, at a selective pressure. The system 10 further includes a gas heater 22, which is coupled to receive high pressure gas from the high pressure gas supply 20 and selectively vary the temperature of the high pressure gas. In an exemplary embodiment, the gas heater 22 does not heat the gas or heats the gas by a relatively small amount. Additionally, the system 10 includes a powder feeder 24 coupled to the high pressure gas supply 20, which houses non-metallic particles 28, such as mica or Boron Nitride (BN) particles, for example, having a selective particle volume and/or size. In the past, mica and BN particles, (e.g., ranging in size from 5-10 microns) have not been applied in insulative applications. According to embodiments of the invention, with an appropriate deposition process, e,g, a cold spray process, these materials can now be conveniently applied to form layers on metallic or insulative surfaces, where enhanced insulative properties are desired. With the cold spray process the deposition can be had along non-uniform surfaces and numerous geometries, including the various shapes of wire (e.g., round and rectangular).

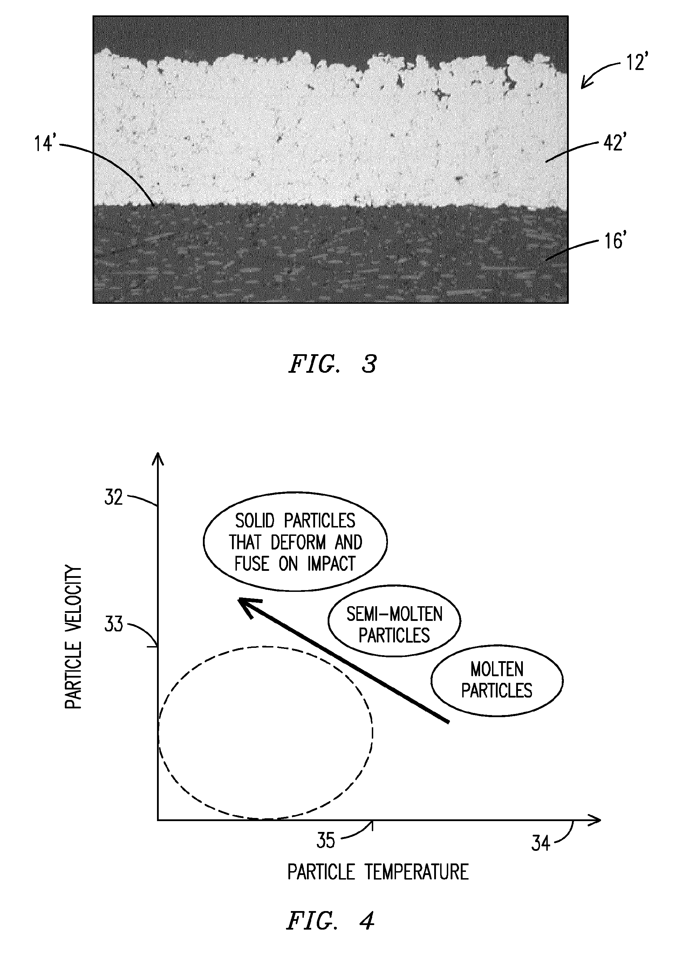

The gas supply 20, gas heater 22 and powder feeder 24 collectively deliver non-metallic particles 28 having a selective volume and size to a gun 26 having a spray nozzle 30. The spray nozzle 30, in turn, propels the non-metallic particles 28 in a direction of the surface 14 of the conductor 16, with a selective spray velocity 32 (FIG. 4), at a selective spray temperature 34 (FIG. 4). The non-metallic particles 28, such as mica particles, for example, are propelled out from the nozzle 30 at a selective spray velocity 32 and a selective spray temperature 34, based on a compressed gas being delivered to the gun 26 from the gas heater 22 and the non-metallic particles 28 being delivered to the gun 26 from the powder feeder 24. The non-metallic particles 28 are accelerated toward the surface 14 of the conductor 16, where on impact with the surface 14, they deform or embed into the substrate (in the case of a fabric type material) and form the coating 12. One advantage of using the cold spray process in the embodiments of the present invention is that an adhesive is not needed over the surface 14, as the non-metallic particles 28 will adhere to the surface 14 without the need of an adhesive. However, in an exemplary embodiment of the present invention, an adhesive may be mixed with the non-metallic particles 28 and the mixture may be cold-sprayed at the surface 14 in one step, for example.

A controller 36 is coupled to the gas supply 20, gas heater 22 and powder feeder 24, and the controller 36 is configured to determine the spray velocity and spray temperature of the non-metallic particles 28 being propelled toward the surface 14 of the conductor 16. In an exemplary embodiment of the present invention, the controller 36 would control variables such as gas pressure and temperature. However, the particle size and volume of the non-metallic particles 28 in the mix would be determined/selected before the non-metallic particles 28 were put into the powder feeder 24. The size/volume of the non-metallic particles 28 would be determined, during qualification stages of the specific coating process, to meet the needed requirements.

As illustrated in the exemplary embodiment of FIG. 4, the controller 36 monitors the gas pressure and/or the spray temperature 34, while the gun propels the non-metallic particles 28 to the surface 14 of the conductor 16, to keep the spray velocity 32 within predetermined velocity limits and/or to limit the selective spray temperature 34 to less than a predetermined maximum temperature threshold 35. Provided that the controller 36 limits the spray velocity 32 and/or the spray temperature 34 to less than the respective velocity threshold 33 and/or the temperature threshold 35, a variety of material may be utilized for the non-metallic particles 28 being propelled toward the surface 14 of the conductor 16 and/or for the conductor 16 itself. Additionally, by limiting the spray velocity 32 and/or spray temperature 34 to less than the respective velocity threshold 33 and/or temperature threshold 35, the non-metallic particles 28 may be adhered to the surface 14 of the conductor 16, without sliding off the surface 14 of the conductor 16 and/or without damaging the surface 14 of the conductor 16. The controller 36 varies the spray velocity 32, based on varying the pressure of the gas. In an exemplary embodiment, spray materials such as, but not limited to, Mica Powder, Boron Nitride, Tungsten Carbide, Carbon powder, Organic polymers and powdered epoxy resins may be used, for example. In an additional exemplary embodiment, the spray temperature threshold 35 may be in the range of -40C to 120C, for spraying of organic polymers or epoxy resins, for example. The exemplary temperature range of - 40C to 120C is selected, since the surface 14 of the conductor 16 would be damaged and/or burned if the organic polymers or epoxy resins were sprayed at a temperature in excess of the temperature range. Based on the exemplary embodiment of the system 10 illustrated in FIG. 1, a variety of coatings 12 may be cold-sprayed onto the surface 14 of the conductor 16. FIG. 2 illustrates an exemplary embodiment of a coating 12. For example, a mixture of adhesive and insulative particles (e.g. mica) may be cold-sprayed onto the surface 14 of the conductor 16, to form the layer 12 of electrical insulation to the surface 14 of the conductor 16. The respective spray velocity and/or spray temperature of the cold-spraying of the mixture of non-metallic particles 28 may be monitored by the controller 36, so not to exceed the respective maximum velocity threshold 33 and/or maximum temperature threshold 35, so that the non-metallic particles 28 adhere to the surface 14 of the conductor 16, and prevent the non-metallic particles 28 from penetrating and/or damaging the surface 14 of the conductor 16. The controller 36 controls the velocity threshold 33 (via. controlling the gas pressure) and/or the temperature threshold 35, based on a predetermined particle volume and/or a predetermined particle size of the non-metallic particles 28. The controller 36 is configured to selectively determine the velocity threshold 33 and the temperature threshold 35, based on one or more desired coating characteristics of the coating 12, such as a minimum thickness for the conductor 16. In an exemplary embodiment, the insulation characteristics of the coating 12 are dependent on a thickness of the coating 12 and uniformity of the coating 12. Although the above embodiment discusses mica particles, a variety of particles may be cold-sprayed onto the surface 14 of the conductor 16, such as boron-nitride (BN) particles, for example.

Although the embodiment of the present invention of FIG. 1 illustrates a process for cold-spraying the surface 12 (i.e., one side) of the conductor 14, the invention may be utilized to cold-spray an insulation material onto multiple sides of a conductor 14, including a rear surface 40 (FIG. 1), by simply reversing the orientation of the conductor 14. Additionally, the high pressure gas supply 20, gas heater 22 and powder 24 may be selectively adjusted using the controller 36 such that a coating applied to the rear surface 40 of the conductor 14 will have different characteristics, compared to the coating 12 applied to the front side of the conductor 14. For example, different sides of the conductor 14 will be subject to varying electrical or thermal conditions and/or varying spacings relative to adjacent conductors, and thus their respective coatings may be individually tailored, using the system 10, to accommodate this arrangement.

FIG. 3 illustrates an exemplary embodiment of a coating 12', distinct from the coating 12 illustrated in the embodiment of FIG. 2. In the exemplary embodiment of FIG. 3, a mixture 42' of glass fiber and epoxy resin particles are cold-sprayed onto the surface 14' of the conductor 16', using the system 10 of FIG. 1. The mixture of the glass fiber and epoxy resin particles would work together to adhere the particles to the conductor surface 14'. After the mixture 42' of the glass fiber and epoxy resin particles have been cold-sprayed onto the surface 14' of the conductor 16', the temperature of the mixture 42' is heated, to cure the epoxy resin component within the coating 12'. In an exemplary embodiment, such heating is done using a number of methods, such as induction, radiant heating, or passing the conductor through an oven, for example.

The embodiments of the present invention illustrated in FIGS. 5-8 and discussed below are similar to the embodiments of the present invention illustrated in FIGS. 1-4 and discussed above, with the exception that a non-metallic substrate is targeted with the cold spraying of material, rather than the surface of the conductor, so to enhance various properties of the non-metallic substrate.

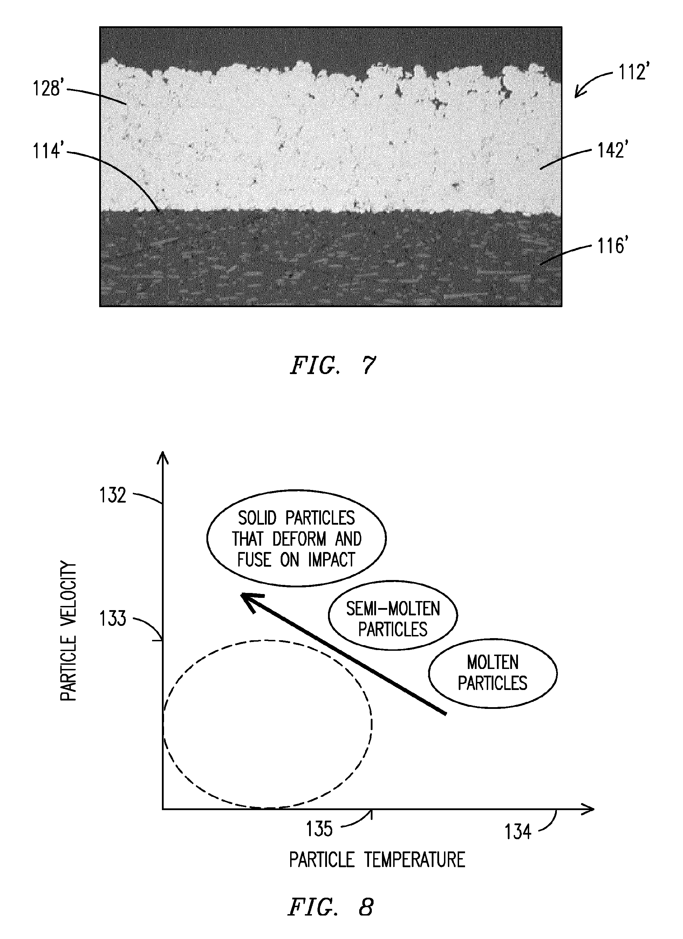

FIG. 5 illustrates an exemplary embodiment of a system 110 which is similar to the system 10 discussed above and illustrated in FIG. 1. The system 110 is utilized to apply a layer 112 of material to a surface of a non-metallic substrate 116, to enhance a performance characteristic of the non-metallic substrate 116, such as an insulative material to enhance an insulative property of the non-metallic substrate, for example. The system 110 includes a high pressure gas 120 supply which stores high pressure gas, such as helium, for example, at a selective pressure. The system 110 further includes a gas heater 122, which is coupled to receive high pressure gas from the high pressure gas supply 120 and selectively vary the temperature of the high pressure gas. Additionally, the system 110 includes a powder feeder 124 coupled to the high pressure gas supply 120, which houses non-metallic particles 128, such as mica, barium nitrate (BN), and/or binder resin particles, for example, having a selective particle volume and/or size. The gas supply 120, gas heater 122 and powder feeder 124 collectively deliver non-metallic particles 128 having a selective volume and size to a gun 126 having a spray nozzle 130. The spray nozzle 130, in turn, propels the non-metallic particles 128 in a direction of the non-metallic substrate 116, with a selective spray velocity (via. a selective pressure) 132 (FIG. 8), at a selective spray temperature 134 (FIG. 8). The non-metallic particles 128, such as mica particles, for example, are propelled out from the nozzle 130 at a selective spray velocity 132 and a selective spray temperature 134, based on a compressed gas being delivered to the gun 126 from the gas heater 122 and the non-metallic particles 128 being delivered to the gun 126 from the powder feeder 124. The non-metallic particles 128 are accelerated toward the non-metallic substrate 116, where on impact with the non-metallic substrate 116, they deform and bond or embed into the non-metallic substrate 116, to form the layer 112.

The system 110 further includes a controller 136 coupled to the gas heater 122, powder feeder 124, gun 126 and the high pressure gas supply 120. The controller 136 is configured to monitor gas pressure (to monitor the spray velocity 132) and spray temperature 134, based on one or more of a predetermined volume of the non-metallic particles 128, and a predetermined density of the non-metallic particles 128 within the powder feeder 124. A specific particle size and mixture of the non-metallic particles 128 is loaded into the powder feeder 124.

In an exemplary embodiment, the controller 136 limits the selective spray velocity 132 (by varying the gas pressure) to less than a predetermined maximum velocity threshold 133 (FIG. 8), and limits the selective spray temperature 134 to less than a predetermined maximum temperature threshold 135 (FIG. 8). However, in an alternate embodiment, the controller may simply limit either of the spray velocity or spray temperature to its maximum threshold. In an exemplary embodiment, the spray temperature threshold 135 may be less than 100C for spraying on a non-metallic substrate.

A glass backing 114, such as glass cloth, for example, usually covers the surface of the non-metallic substrate 116. The glass cloth may be woven and is applied to the substrate 116 by means other than cold-spraying. As illustrated in the exemplary embodiment of FIG. 5, the glass backing 114 is applied to the non-metallic substrate 116. Upon applying the glass backing 114 to the non-metallic substrate 116, the system 110 may be activated, so that the non-metallic particles 128, such as mica particles, are cold sprayed, through the nozzle 130 and onto the glass backing surface 114, in order to enhance a performance characteristic of the non-metallic substrate 116, such as electrical insulation, for example. In an exemplary embodiment, in which a material is applied to a non-metallic substrate, the density and impregnation of the non-metallic substrate would control the property of the coating 112 to be enhanced.

As with the embodiments of the present invention discussed above in FIGS. 1-4, the cold spray process of the non-metallic particles 128, such as the mica particles, involves combining a mixture of a pressurized gas and the non-metallic particles 128, selectively modifying a temperature of the pressurized gas, and accelerating the mixture in a direction of the surface of the glass backing 114. As illustrated in FIG. 6, the accelerated non-metallic particles 128, such as the mica particles, impact the surface of the glass backing 114. As previously discussed, during the cold spray process, a spray parameter, such as velocity and/or temperature of the non-metallic particles 128, such as the mica particles, may be adjusted by the controller 136 such that it is less than the respective velocity and temperature thresholds 133,135.

Based on the types of accelerated non-metallic particles 128 onto the surface of the glass backing 114 or embedded within the substrate 116, a variety of performance characteristics of the non-metallic substrate 116 may be enhanced, such as an enhanced high voltage insulation, enhanced thermal conductivity, and/or enhanced electrical conductivity, for example. In an exemplary embodiment, Boron Nitride particles may be sprayed onto a non-metallic substrate, to penetrate into the substrate and distribute uniformly without damaging the substrate.

In an exemplary embodiment, the cold spray process described above, in which the non-metallic particles 128 are accelerated onto the surface of the glass backing 114 of the non-metallic substrate 116, involves individual steps of the cold spray process which are performed on a single manufacturing line, such that the glass backing 114 does not need to be transported between multiple manufacturing lines in order for the parameter of the non-metallic substrate 116, such as an electrical insulation characteristic, to be enhanced.

In another exemplary embodiment of the present invention illustrated in FIG. 7, a mixture 142' of conducting material and the particles, such as the mica particles, and the mixture may in-turn be cold-sprayed onto the surface of the glass backing 114', using the system described above. Examples of such conducting material may be carbon and Tungsten Carbide, for example. The cold-spraying may be performed, in order to enhance an electrical conductivity of the glass backing 114', for example. In addition, a semi-conducting material may be mixed with the particles, in order to obtain a mixture which is sufficient to enhance the electrical conductivity of the glass backing 114', when cold-sprayed onto the surface of the glass backing 114'. In an exemplary embodiment, a conductive tape may be formed, where the conducting material and the non-metallic particles are individually sprayed onto the surface of the glass backing 114', in separate spraying steps, rather than in one collective spraying step of the mixture 142', as discussed above. In a further exemplary embodiment, a conductive tape may be formed, by forming a first layer of insulation material, such as the glass backing 114'; forming a second layer as a transition layer over the first layer, where the transition layer includes a mixture of insulation material and conducting material, such as the mixture 142' discussed above; and forming a third layer over the second layer, where the third layer includes conducting material, such as carbon and/or Tungsten Carbide, for example, to form an enhanced physical bonding between the first and second layers. However, the first insulation layer of such a conductive tape is not limited to the glass backing 114', and the first insulation layer may be any flexible backing material, such as a woven layer of glass, a layer formed of fibers, or a polymer backing, for example, which has resilient and flexible properties for being stored in a rolled form or for winding about a surface, for example.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A method for applying a layer of material to a surface of a non-metallic substrate to enhance a performance characteristic of the non-metallic substrate, the method comprising:
providing a glass backing for the non-metallic substrate; and
cold spraying a plurality of boron nitride (BN) particles onto a surface of the glass backing.

2. The method of claim 1, wherein said cold spraying of said plurality of boron nitride particles comprises:
combining a mixture of a pressurized gas and said plurality of boron nitride particles;
selectively modifying a temperature of the pressurized gas;
accelerating said mixture in a direction of the surface of the glass backing; and
impacting the surface of the glass backing with the accelerated boron nitride particles.

3. The method of claim 1, wherein said cold spraying is performed based on at least one spray parameter of said plurality of boron nitride particles being less than a respective maximum threshold to adhere the boron nitride particles to the glass backing surface without damaging the glass backing surface.

4. The method of claim 3, wherein said cold spraying is performed based on a spray velocity parameter of said plurality of boron nitride particles being less than a maximum velocity threshold, and a temperature parameter of said plurality of boron nitride particles being less than a maximum temperature threshold.
